# EUROPEAN PATENT APPLICATION

(11) **EP 4 166 712 A1**
(43) Date of publication of application: **19.04.2023**
(21) Application number: 21823115.7
(22) Date of filing: 13.05.2021
(51) Int. Cl.: D06M 15/568, D06N 3/14

(54) **METHOD FOR PRODUCING COAGULATED MATERIAL**

(30) Priority: 11.06.2020 JP 2020101603
(71) Applicant: DIC Corporation, Tokyo 174-8520 (JP)
(72) Inventor: TETSUI Tomohiro, Takaishi-shi, Osaka 592-0001 (JP)
(74) Representative: Gerauer, Marc Philippé
(86) International application number: PCT/JP2021/018139
(87) International publication number: WO 2021/251053

(57) **Abstract**

The present invention provides a method for producing a coagulated material, comprising impregnating a fiber substrate with a water dispersion of a urethane resin (X) which uses a compound (a1) having a nonionic group as a raw material, and then immersing the resultant substrate in a coagulant (Y). The amount of the compound (a1) having a nonionic group used is preferably 5% by mass or less, based on the total mass of the raw materials constituting the urethane resin (X). The coagulant (Y) is preferably at least one member selected from the group consisting of a metal compound (Y1), an acid compound (Y2), and a nonmetal compound (Y3) other than the acid compound (Y2). By the method of the present invention, a coagulated material having excellent hand feeling, alkali resistance, and dyeing resistance can be obtained.

## Description

### TECHNICAL FIELD

The present invention relates to a method for producing a coagulated material.

### BACKGROUND ART

Urethane resins have excellent mechanical strength and hand feeling, and are therefore widely used in the production of synthetic leather (including artificial leather), a coating agent, an adhesive, gloves, clothing, and the like. With respect to the urethane resin, a solvent urethane resin containing N,N-dimethylformamide (DMF) has been mainly used. However, Europe regulates DMF, China and Taiwan strengthen the VOC emissions control, and the major apparel manufacturers regulate DMF, and, under the circumstances, the development of an environment-friendly urethane resin using a weak solvent or an aqueous solvent, or using no solvent, or the like is required.

In this situation, a urethane resin water dispersion (polyurethane dispersion) having a urethane resin dispersed in water has begun to be used in the above-mentioned applications. However, when a fiber substrate is impregnated with the urethane resin water dispersion, the state of the resin filling the inside of the fiber substrate is not porous, which is different from a conventional solvent urethane resin, and the urethane resin migrates to the surface of the fiber substrate (migration) in the drying step, leading to a problem in that the resultant fiber substrate is not uniform and has poor hand feeling.

Further, as a method for achieving solventless urethane resin in the above-mentioned applications, there has been made the development of a urethane resin water dispersion having a low viscosity for impregnating very small gaps between fibers with the urethane resin and a urethane resin water dispersion having thermal coagulation properties imparted for causing uniform coagulation of the urethane resin (see, for example, PTL 1). However, with respect to the above-mentioned urethane resin water dispersions, it has been pointed out that the viscosity of the urethane resin liquid is reduced during thermal coagulation, and hence the urethane resin adheres to or is fixed to interlocking points of fibers, so that the resultant processed product has poor hand feeling. For this reason, processing using nonwoven fabric of a special "island-in-sea" structure fiber is required, and, after the impregnation processing, the alkali dissolution and extraction step for the "sea" portion of fiber is needed, but the alkali extraction step has a disadvantage in that the extraction conditions must be changed according to the amount of processing and the type of the fiber used and thus the extraction is likely to be unsatisfactory, and problems caused in the actual production line, such as poor hand feeling of the products and dyeing failure due to the residual "sea" portion, have been pointed out.

### CITATION LIST

### PATENT LITERATURE

PTL 1: JP2016-84463A

### SUMMARY OF INVENTION

### TECHNICAL PROBLEM

A task to be achieved by the present invention is to provide a method for producing a coagulated material having excellent hand feeling, alkali resistance, and dyeing resistance.

### SOLUTION TO PROBLEM

In the present invention, there is provided a method for producing a coagulated material, wherein the method comprises impregnating a fiber substrate with a water dispersion of a urethane resin (X) which uses a compound (a1) having a nonionic group as a raw material, and then immersing the resultant substrate in a coagulant (Y).

### ADVANTAGEOUS EFFECTS OF INVENTION

By the method of the present invention, a coagulated material having excellent hand feeling, alkali resistance, and dyeing resistance can be obtained.

### DESCRIPTION OF EMBODIMENTS

The method for producing a coagulated material of the present invention comprises impregnating a fiber substrate with a water dispersion of a urethane resin (X) which uses a compound (a1) having a nonionic group as a raw material, and then immersing the resultant substrate in a coagulant (Y).

As the fiber substrate, for example, there can be used a fiber substrate, such as nonwoven fabric, woven fabric, or knitted fabric, each formed from a polyester fiber, a polyethylene fiber, a nylon fiber, an acrylic fiber, a polyurethane fiber, an acetate fiber, a rayon fiber, a polylactic acid fiber, cotton, linen, silk, wool, a glass fiber, a carbon fiber, a mixed fiber thereof, or the like; the above-mentioned nonwoven fabric which is impregnated with a resin, such as a polyurethane resin; the above-mentioned nonwoven fabric which has further formed thereon a porous layer; or a resin substrate, such as a thermoplastic urethane (TPU).

In the invention, with respect to the urethane resin (X), it is necessary that a so-called nonionic urethane resin using a compound (a1) having a nonionic group as a raw material be used. It is preferred that the urethane resin (X) does not contain a cationic group and an anionic group, and, in this case, a coagulated material having further excellent alkali resistance and dyeing resistance can be obtained.

With respect to the compound (a1) having a nonionic group, for example, there can be mentioned a compound having an oxyethylene structure, and, for example, a polyether polyol having an oxyethylene structure, such as polyethylene glycol, polyoxyethylene polyoxypropylene glycol, polyoxyethylene polyoxytetramethylene glycol, or polyethylene glycol dimethyl ether, can be used. These compounds may be used individually or in combination. Of these, from the viewpoint of more easily controlling the hydrophilicity and achieving further excellent alkali resistance and dyeing resistance, at least one compound selected from the group consisting of polyethylene glycol, polyoxyethylene polyoxypropylene glycol, and polyethylene glycol dimethyl ether is preferably used, and polyethylene glycol is especially preferred.

From the viewpoint of achieving further excellent alkali resistance, dyeing resistance, emulsifiability, and water dispersion stability, the compound (a1) having a nonionic group preferably has a number average molecular weight in the range of from 200 to 10,000, more preferably in the range of from 300 to 3,000, more preferably in the range of from 300 to 2,000. The number average molecular weight of the compound (a1) having a nonionic group indicates a value measured by a gel permeation column chromatography (GPC) method.

From the viewpoint of achieving further excellent alkali resistance, dyeing resistance, emulsifiability, and water dispersion stability, the amount of the compound (a1) having a nonionic group used is preferably 5% by mass or less, more preferably 4% by mass or less, further preferably in the range of from 0.25 to 3.5% by mass, especially preferably in the range of from 0.5 to 3% by mass, based on the total mass of the raw materials constituting the urethane resin (X).

With respect to the urethane resin (X), specifically, for example, a reaction product of the compound (a1) having a nonionic group, a chain extender (a2), a polyol (a3), and a polyisocyanate (a4) can be used.

As the chain extender (a2), a chain extender having a molecular weight of less than 500 (preferably in the range of from 50 to 450) can be used, and, specifically, there can be used a chain extender having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerol, sorbitol, bisphenol A, 4,4'-dihydroxydiphenyl, 4,4'-dihydroxydiphenyl ether, or trimethylolpropane; a chain extender having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, or hydrazine; or the like. These chain extenders may be used individually or in combination. The molecular weight of the chain extender (a2) indicates a value determined by calculation from the chemical formula.

With respect to the chain extender (a2), from the viewpoint of easily achieving chain extension even at a relatively low temperature of 30°C or less to suppress the energy consumption during the reaction, and from the viewpoint of achieving further excellent mechanical strength, film-forming properties, hand feeling, and peel strength due to introduction of a urea group, a chain extender having an amino group (hereinafter, referred to simply as "amine chain extender") is preferably used, and, from the viewpoint of achieving further excellent emulsifiability and water dispersion stability even when increasing the solids content of the urethane resin (X), an amine chain extender having a molecular weight in the range of from 30 to 250 is more preferably used. When two or more types of the chain extenders are used in combination, the molecular weight of the chain extenders means an average of the molecular weights, and the chain extenders may have molecular weights such that the average of the molecular weights falls in the above-mentioned preferred range of the molecular weight.

From the viewpoint of achieving further excellent mechanical strength, film-forming properties, hand feeling, peel strength, emulsifiability, and water dispersion stability, and from the viewpoint of further easily increasing the solids content of the urethane resin (X), the amount of the chain extender (a2) used is further preferably in the range of from 0.1 to 30% by mass, especially preferably in the range of from 0.5 to 10% by mass, based on the total mass of the raw materials constituting the urethane resin (X).

As the polyol (a3), for example, polyether polyol other than the compound (a1) having a nonionic group, polyester polyol, polyacrylic polyol, polycarbonate polyol, polybutadiene polyol, or the like can be used. These polyols may be used individually or in combination.

From the viewpoint of the mechanical strength of the obtained film, the polyol (a3) preferably has a number average molecular weight in the range of from 500 to 100,000, more preferably in the range of from 800 to 10,000. The number average molecular weight of the polyol (a3) indicates a value measured by a gel permeation column chromatography (GPC) method.

From the viewpoint of achieving further excellent mechanical strength, the amount of the polyol (a3) used is further preferably in the range of from 40 to 90% by mass, especially preferably in the range of from 50 to 80% by mass, based on the total mass of the raw materials constituting the urethane resin (X).

As the polyisocyanate (a4), for example, there can be used an aromatic polyisocyanate, such as phenylene diisocyanate, toluene diisocyanate, diphenylmethane diisocyanate, xylylene diisocyanate, naphthalene diisocyanate, polymethylene polyphenyl polyisocyanate, or carbodiimidated diphenylmethane polyisocyanate; an aliphatic polyisocyanate or alicyclic polyisocyanate, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, or norbornene diisocyanate, or the like. These polyisocyanates may be used individually or in combination.

From the viewpoint of achieving further excellent mechanical strength, the amount of the polyisocyanate (a4) used is further preferably in the range of from 5 to 40% by mass, especially preferably in the range of from 10 to 35% by mass, based on the total mass of the raw materials constituting the urethane resin (X).

From the viewpoint of achieving further excellent hand feeling, water dispersion stability, and film-forming properties, the urethane resin (X) preferably has an average particle diameter in the range of from 0.01 to 1 µm, more preferably in the range of from 0.05 to 0.9 µm. A method for measuring the average particle diameter of the urethane resin (X) is described in the Examples shown below.

The method for producing the urethane resin water dispersion used in the invention is described below.

The method for producing the urethane resin water dispersion used in the invention preferably has the steps of: reacting the above-mentioned compound (a1) having a nonionic group, the polyol (a3), and the polyisocyanate (a4) with each other without using a solvent to obtain a urethane prepolymer (i) having an isocyanate group (hereinafter, referred to simply as "prepolymer step"), and then dispersing the urethane prepolymer (i) in the water (hereinafter, referred to simply as "emulsifying step"), and subsequently reacting the above-mentioned chain extender (a2) with the resultant urethane prepolymer to obtain a urethane resin (X) (hereinafter, referred to simply as "chain extension step").

It is important that the prepolymer step is conducted without using a solvent. In conventional techniques, the prepolymer step is generally conducted in an organic solvent, such as methyl ethyl ketone or acetone, but the desolvation step for distilling off the organic solvent is needed after the emulsifying step, and several days of the production duration in the actual production site are required. Further, it is difficult to completely distill off the organic solvent in the desolvation step, and it is likely that a slight amount of the organic solvent inevitably remains, making it difficult to successfully take environmental measures. On the other hand, in the method of the invention, the prepolymer step is conducted without using a solvent, and therefore a urethane resin water dispersion containing completely no organic solvent can be obtained, and it is possible to save the power needed for the production process therefor.

From the viewpoint of achieving further excellent surface smoothness, film-forming properties, hand feeling, peel strength, alkali resistance, dyeing resistance, and mechanical strength, in the prepolymer step, the molar ratio of the isocyanate group of the polyisocyanate (a4) to the total of the hydroxyl group of the compound (a1) having a nonionic group and the polyol (a3) [isocyanate group/(hydroxyl group)] is preferably in the range of from 1.1 to 3, more preferably in the range of from 1.2 to 2.

The reaction for the prepolymer step is conducted, for example, at 50 to 120°C for 1 to 10 hours.

The prepolymer step can be conducted using a reaction vessel having an agitating element; a kneading machine, such as a kneader, a continuous kneader, a taper roll, a single-screw extruder, a twin-screw extruder, a triple-screw extruder, a universal mixing machine, PLASTOMILL, or a Bodeda kneading machine; a rotary dispersion mixing machine, such as TK Homomixer, FILMIX, Ebara Milder, CLEARMIX, ULTRA-TURRAX, CAVITRON, or BIO-MIXER; an ultrasonic dispersing apparatus; an apparatus which has no moving part and is capable of mixing a fluid due to flow of the fluid itself, such as an in-line mixer; or the like.

The emulsifying step is preferably conducted at a temperature at which water is not evaporated, for example, at a temperature in the range of from 10 to 90°C. The emulsifying step can be conducted using an apparatus similar to that used in the prepolymer step. Especially, from the viewpoint of easily obtaining a urethane resin water dispersion having a high urethane resin content, a kneading machine is preferably used, and a twin-screw extruder is more preferred.

Further, from the viewpoint of achieving further excellent hand feeling and durability, the prepolymer prior to the emulsifying step preferably has a viscosity at 100°C in the range of from 100 to 100,00,000 mPa•s, preferably in the range of from 1,000 to 1,000,000 mPa•s. The viscosity of the prepolymer indicates a value measured using "MCR302", manufactured by ANTON-PAAR GmbH, under conditions such that the axis is a parallel-plate fixture (d = 0.94 mm) and the frequency is 1 Hz.

The chain extension step is the step of reacting the isocyanate group of the urethane prepolymer (i) and the chain extender (a1) to increase the urethane prepolymer (i) in molecular weight, obtaining a urethane resin (X). With respect to the temperature for the chain extension step, in view of the productivity, the chain extension step is preferably conducted at 50°C or lower.

From the viewpoint of achieving further excellent alkali resistance, dyeing resistance, film-forming properties, and mechanical strength, in the chain extension step, the molar ratio of the total of the hydroxyl group and amino group of the chain extender (a1) to the isocyanate group of the urethane prepolymer (i) [(hydroxyl group and amino group)/isocyanate group] is preferably in the range of from 0.8 to 1.1, more preferably in the range of from 0.9 to 1.

The chain extension step can be conducted using an apparatus similar to that used in the prepolymer step.

With respect to the urethane resin water dispersion used in the invention, which is being produced, the content of the urethane resin (X) in the urethane resin water dispersion is preferably in the range of from 50 to 80% by mass. The so-called urethane resin (X) solids content of the water dispersion is high as mentioned above, and therefore the urethane resin water dispersion has improved drying properties, and thus further excellent hand feeling, resin removal resistance, alkali resistance, and dyeing resistance can be obtained. After produced, the urethane resin water dispersion may be further diluted with water.

As the water used in the invention, ion-exchanged water, distilled water, or the like can be used. These waters may be used individually or in combination.

The urethane resin water dispersion used in the invention contains the above-mentioned urethane resin (X) and water as essential components, but may contain an additional additive if necessary.

With respect to the additional additive, for example, there can be used an emulsifying agent, a crosslinking agent, a neutralizing agent, a thickener, a urethane-forming reaction catalyst, a filler, a pigment, a dye, a flame retardant, a leveling agent, an antiblocking agent, a film forming auxiliary, a foaming agent, or the like. These additives may be used individually or in combination. The additive or additives are appropriately selected according to the purpose for which the foamed sheet is used. The urethane resin water dispersion used in the invention contains no organic solvent in the production process therefor, but it is acceptable for the urethane resin water dispersion to contain an organic solvent as the additive. Of these, an emulsifying agent is preferably used in view of achieving further excellent emulsifiability and water dispersion stability.

As the emulsifying agent, for example, there can be used a nonionic emulsifying agent, such as polyoxyethylene nonylphenyl ether, polyoxyethylene lauryl ether, polyoxyethylene styrylphenyl ether, polyoxyethylene sorbitol tetraoleate, or a polyethylene-polypropylene copolymer; an anionic emulsifying agent, such as a fatty acid salt of, e.g., sodium oleate, or an alkylsulfate salt, an alkylbenzenesulfonic acid salt, an alkylsulfosuccinic acid salt, a naphthalenesulfonic acid salt, a polyoxyethylene alkylsulfuric acid salt, an alkanesulfonate sodium salt, or an alkyl diphenyl ether sulfonic acid sodium salt; a cationic emulsifying agent, such as an alkylamine salt, an alkyltrimethylammonium salt, or an alkyldimethylbenzylammonium salt, or the like. These emulsifying agents may be used individually or in combination. Of these, an anionic emulsifying agent is preferably used in view of further reducing resin removal of the urethane resin from the fiber substrate.

From the viewpoint of achieving further excellent reduction of resin removal, alkali resistance, and dyeing resistance, the amount of the emulsifying agent used is preferably 7 parts by mass or less, more preferably in the range of from 0 to 5% by mass, relative to 100 parts by mass of the urethane resin (X) (= solids).

The coagulant (Y) is used for causing coagulation of the urethane resin (X), and, for example, a metal compound (Y1), an acid compound (Y2), or a nonmetal compound (Y3) other than the acid compound (Y2) can be used.

As the metal compound (Y1), for example, there can be used a monovalent metal compound, such as calcium chloride, magnesium acetate, or sodium chloride; a multivalent metal compound, such as calcium nitrate, zinc nitrate, zinc chloride, or aluminum sulfate, or the like. These compounds may be used individually or in combination.

As the acid compound (Y2), for example, there can be used succinic acid, oxalic acid, malonic acid, succinic acid, glutaric acid, adipic acid, fumaric acid, maleic acid, pimelic acid, suberic acid, azelaic acid, sebacic acid, phthalic acid, isophthalic acid, terephthalic acid, tartaric acid, citric acid, aconitic acid, glutamic acid, aspartic acid, or the like. These acids may be used individually or in combination.

As the nonmetal compound (Y3), for example, there can be used an ammonium halide, such as ammonium chloride, tetramethylammonium chloride, tetraethylammonium chloride, tetrapropylammonium chloride, tetrabutylammonium chloride, tetrahexylammonium chloride, tetraoctylammonium chloride, tetraphenylammonium chloride, triethylmethylammonium chloride, triethylhexylammonium chloride, trioctylmethylammonium chloride, trioctylbutylammonium chloride, trioctylbenzylammonium chloride, trimethylbenzylammonium chloride, tributylbenzylammonium chloride, triphenylisobutylammonium chloride, triphenylbenzylammonium chloride, ammonium bromide, tetramethylammonium bromide, tetraethylammonium bromide, tetrapropylammonium bromide, tetrabutylammonium bromide, tetrahexylammonium bromide, tetraoctylammonium bromide, tetraphenylammonium bromide, triethylmethylammonium bromide, triethylhexylammonium bromide, trioctylmethylammonium bromide, trioctylbutylammonium bromide, trioctylbenzylammonium bromide, trimethylbenzylammonium bromide, tributylbenzylammonium bromide, triphenylisobutylammonium bromide, triphenylbenzylammonium bromide, ammonium iodide, tetramethylammonium iodide, tetraethylammonium iodide, tetrapropylammonium iodide, tetrabutylammonium iodide, tetrahexylammonium iodide, tetraoctylammonium iodide, tetraphenylammonium iodide, triethylmethylammonium iodide, triethylhexylammonium iodide, trioctylmethylammonium iodide, trioctylbutylammonium iodide, trioctylbenzylammonium iodide, trimethylbenzylammonium iodide, tributylbenzylammonium iodide, triphenylisobutylammonium iodide, or triphenylbenzylammonium iodide; an inorganic acid ammonium, such as ammonium hydrochloride, ammonium phosphate, ammonium borate, ammonium hydrogenfluoride, ammonium sulfate, ammonium nitrate, ammonium silicate, or ammonium phosphate; an organic acid ammonium, such as ammonium formate, ammonium acetate, ammonium propionate, ammonium malate, or ammonium sulfamate; an inorganic acid phosphonium, such as tetraphenylphosphonium chloride, tetraphenylphosphonium iodide, tetramethylphosphonium bromide, tetrabutylphosphonium chloride, tetrabutylphosphonium bromide, or tetrabutylphosphonium iodide; an organic acid phosphonium, such as tetrabutylphosphonium acetate; an alcohol solvent, such as ethanol, 1-propanol, 2-propanol, 1-butanol, 2-butanol, 2-methyl-2-propanol, 1-pentanol, 2-pentanol, 2-methyl-2-butanol, 1-hexanol, 2-hexanol, cyclohexanol, 2-methyl-2-pentanol, or 3-methyl-3-pentanol, or the like. These nonmetal coagulants may be used individually or in combination.

With respect to the coagulant (Y), among those mentioned above, from the viewpoint of achieving further excellent coagulation properties and dyeing resistance, a monovalent metal compound and/or an inorganic acid ammonium is preferred, and sodium chloride and/or ammonium sulfate is more preferred.

The coagulant (Y) can be used in the form of a coagulating bath, and the content of the coagulant (Y) in the coagulating bath is preferably in the range of from 1 to 30% by mass, more preferably in the range of from 5 to 20% by mass.

The method for producing a coagulated material of the present invention is described below.

The method for producing a coagulated material of the invention comprises impregnating the above-mentioned fiber substrate with a water dispersion of a urethane resin (X) which uses a compound (a1) having a nonionic group as a raw material, and then immersing the resultant substrate in the above-mentioned coagulant (Y).

As a method for impregnating the fiber substrate with the aqueous urethane resin water dispersion, for example, there can be mentioned a method in which the fiber substrate is directly placed in a bath containing the aqueous urethane resin water dispersion, and then an excess of the dispersion is squeezed by a mangle or the like. The time for the impregnation is, for example, in the range of from 1 to 30 minutes.

The resultant impregnated substrate is then removed and further immersed in a coagulating bath containing the coagulant (Y), so that the urethane resin (X) undergoes coagulation, obtaining a fiber substrate in a state such that a coagulated material adheres to the surface and inside of the fiber substrate. In this instance, the time for the impregnation and coagulation is, for example, in the range of from 1 to 30 minutes.

After the coagulation, if necessary, the fiber substrate having a coagulated material of the urethane resin can be exposed to running water, for example, for 10 minutes to 2 hours to clean and remove the unnecessary coagulant.

By the above-described method of the present invention, a coagulated material having excellent hand feeling, alkali resistance, and dyeing resistance can be obtained.

### EXAMPLES

Hereinbelow, the present invention will be described in more detail with reference to the following Examples.

### [Synthesis Example 1]

1,000 Parts by mass of polyether polyol ("PTMG 2000", manufactured by Mitsubishi Chemical Corporation; number average molecular weight: 2,000; hereinafter, abbreviated to "PTMG 2000"), 38 parts by mass of polyethylene glycol ("PEG 600", manufactured by NOF Corporation; number average molecular weight: 600; hereinafter, abbreviated to "PEG"), and 262 parts by mass of dicyclohexylmethane diisocyanate (hereinafter, abbreviated to "HMDI") were reacted in the presence of 0.1 part by mass of tin(II) octylate at 100°C until the NCO% reached 2.8% by mass to obtain a urethane prepolymer A1. The obtained urethane prepolymer A1 had a viscosity of 7,280 mPa•s.

A1 heated to 70°C, a 20% by mass aqueous solution of sodium dodecylbenzenesulfonate ("NEOGEN S-20F", manufactured by Dai-ichi Kogyo Seiyaku Co., Ltd.) as an emulsifying agent, and water were fed at the same time to a twin-screw extruder (TEM-18SS, manufactured by Toshiba Machine Co., Ltd.) and mixed with each other to obtain an emulsion. The respective feed rates of the liquids fed were as follows: A1: 10 kg/hour; aqueous solution of emulsifying agent: 2.0 kg/ hour; water: 6.5 kg/hour; and operating conditions for the twin-screw extruder were those at 50°C and 260 rpm.

Then, immediately a water diluted liquid of piperazine (hereinafter, abbreviated to "PP") having an amino group content corresponding to 95% of the NCO group was added to cause chain extension, so that a urethane resin water dispersion (1) having a nonvolatile content of 50% by mass was finally obtained.

### [Synthesis Example 2]

1,000 Parts by mass of PTMG 2000, 19 parts by mass of PEG 600, and 262 parts by mass of HMDI were mixed together and reacted in the presence of 0.1 part by mass of tin(II) octylate at 100°C until the NCO% reached 3.1% by mass to obtain a urethane prepolymer A2. The obtained urethane prepolymer A2 had a viscosity of 7,280 mPa•s.

A2 heated to 70°C, a 20% by mass aqueous solution of sodium dodecylbenzenesulfonate ("NEOGEN S-20F", manufactured by Dai-ichi Kogyo Seiyaku Co., Ltd.) as an emulsifying agent, and water were fed at the same time to a twin-screw extruder (TEM-18SS, manufactured by Toshiba Machine Co., Ltd.) and mixed with each other to obtain an emulsion. The respective feed rates of the liquids fed were as follows: A2: 10 kg/hour; aqueous solution of emulsifying agent: 2.0 kg/hour; water: 0.1 kg/hour; and operating conditions for the twin-screw extruder were those at 50°C and 260 rpm.

Then, immediately a water diluted liquid of isophoronediamine (hereinafter, abbreviated to "IPDA") having an amino group content corresponding to 95% of the NCO group was added to cause chain extension, so that a urethane resin water dispersion (2) having a nonvolatile content of 60% by mass was finally obtained.

### [Synthesis Example 3]

1,000 Parts by mass of PTMG 2000, 18 parts by mass of PEG, and 262 parts by mass of HMDI were mixed together and reacted in the presence of 0.1 part by mass of tin(II) octylate at 100°C until the NCO% reached 3.1% by mass to obtain a urethane prepolymer A3. The obtained urethane prepolymer A3 had a viscosity of 7,280 mPa•s.

A3 heated to 70°C, a polypropylene-polyethylene copolymer ("PLURONIC L-64", manufactured by ADEKA Corporation) as an emulsifying agent, and water were fed at the same time to a twin-screw extruder (TEM-18SS, manufactured by Toshiba Machine Co., Ltd.) and mixed with each other to obtain an emulsion. The respective feed rates of the liquids fed were as follows: A3: 10 kg/hour; emulsifying agent: 0.5 kg/hour; water: 5.8 kg/hour; and operating conditions for the twin-screw extruder were those at 50°C and 260 rpm.

Then, immediately a water diluted liquid of IPDA having an amino group content corresponding to 95% of the NCO group was added to cause chain extension, so that a urethane resin water dispersion (3) having a nonvolatile content of 50% by mass was finally obtained.

### [Synthesis Example 4]

1,000 Parts by mass of PTMG 2000, 18 parts by mass of PEG, and 262 parts by mass of HMDI were mixed together and reacted in the presence of 0.1 part by mass of tin(II) octylate at 100°C until the NCO% reached 3.1% by mass to obtain a urethane prepolymer A4. The obtained urethane prepolymer A4 had a viscosity of 7,280 mPa•s.

A4 heated to 70°C, a 20% by mass aqueous solution of sodium dodecylbenzenesulfonate ("NEOGEN S-20F", manufactured by Dai-ichi Kogyo Seiyaku Co., Ltd.) and a polypropylene-polyethylene copolymer ("PLURONIC L-64", manufactured by ADEKA Corporation) as an emulsifying agent, and water were fed at the same time to a twin-screw extruder (TEM-18SS, manufactured by Toshiba Machine Co., Ltd.) and mixed with each other to obtain an emulsion. The respective feed rates of the liquids fed were as follows: A5: 10 kg/hour; aqueous solution of emulsifying agent S-20F: 1.3 kg/hour; emulsifying agent L-64: 0.3 kg/hour; water: 2.4 kg/hour; and operating conditions for the twin-screw extruder were those at 50°C and 260 rpm.

Then, immediately a water diluted liquid of ethylenediamine (hereinafter, abbreviated to "EA") having an amino group content corresponding to 95% of the NCO group was added to cause chain extension, so that a urethane resin water dispersion (4) having a nonvolatile content of 60% by mass was finally obtained.

### [Synthesis Example 5]

1,000 Parts by mass of polycarbonate diol polyol ("ETERNACOLL UH-200", manufactured by Ube Industries, Ltd.; number average molecular weight: 2,000), 38 parts by mass of PEG, and 262 parts by mass of HMDI were reacted in the presence of 0.1 part by mass of tin(II) octylate at 100°C until the NCO% reached 2.8% by mass to obtain a urethane prepolymer A5. The obtained urethane prepolymer A5 had a viscosity of 29,000 mPa•s.

A5 heated to 70°C, a 20% by mass aqueous solution of sodium dodecylbenzenesulfonate ("NEOGEN S-20F", manufactured by Dai-ichi Kogyo Seiyaku Co., Ltd.) as an emulsifying agent, and water were fed at the same time to a twin-screw extruder (TEM-18SS, manufactured by Toshiba Machine Co., Ltd.) and mixed with each other to obtain an emulsion. The respective feed rates of the liquids fed were as follows: A1: 10 kg/hour; aqueous solution of emulsifying agent: 2.0 kg/hour; water: 6.5 kg/hour; and operating conditions for the twin-screw extruder were those at 50°C and 260 rpm.

Then, immediately a water diluted liquid of PP having an amino group content corresponding to 95% of the NCO group was added to cause chain extension, so that a urethane resin water dispersion (5) having a nonvolatile content of 50% by mass was finally obtained.

### [Comparative Synthesis Example 1]

1,000 Parts by mass of PTMG 2000, 18 parts by mass of dimethylolpropionic acid (hereinafter, abbreviated to "DMPA"), and 262 parts by mass of HMDI were mixed together and reacted in the presence of 0.1 part by mass of tin(II) octylate at 100°C until the NCO% reached 2.4% by mass to obtain a urethane prepolymer B1. The obtained urethane prepolymer B1 had a viscosity of 949,000 mPa•s.

B1 heated to 70°C, triethylamine as a neutralizing agent, a polypropylene-polyethylene copolymer ("PLURONIC L-64", manufactured by ADEKA Corporation) as an emulsifying agent, and water were fed at the same time to a twin-screw extruder (TEM-18SS, manufactured by Toshiba Machine Co., Ltd.) and mixed with each other to obtain an emulsion. The respective feed rates of the liquids fed were as follows: A5: 10 kg/hour; neutralizing agent: 0.1 kg/hour; emulsifying agent L-64: 0.3 kg/hour; water: 8.5 kg/hour; and operating conditions for the twin-screw extruder were those at 50°C and 260 rpm.

Then, immediately a water diluted liquid of piperazine (hereinafter, abbreviated to "PP") having an amino group content corresponding to 95% of the NCO group was added to cause chain extension, so that a urethane resin water dispersion (R1) having a nonvolatile content of 50% by mass was finally obtained.

### [Examples 1 to 3]

Ion-exchanged water was added to 1,000 parts by mass of each of the above-obtained urethane resin water dispersions (1) to (3) so that the resultant dispersion had a solids content of 30% by mass, and 10 parts by mass of a thickener ("Borchi Gel L75N", manufactured by Borchers GmbH) was further added and the resultant mixture was stirred at 2,000 rpm using a mechanical mixer to prepare a blend.

Then, polyester fiber nonwoven fabric (weight per unit area: 250 g/m²) was impregnated with the blend, and then the unnecessary blend was squeezed using a rubber roller mangle so that the impregnation amount became 200%. Then, the nonwoven fabric impregnated with the blend was immersed in a coagulating bath of a 5% by mass aqueous solution of sodium chloride (hereinafter, abbreviated to "NaCl") at 25°C for 3 minutes to cause coagulation of the urethane resin. Further, after the coagulation, while exposing the processed fabric to running water, the fabric was washed with water and squeezed by a rubber roller mangle 10 times. Finally, the fabric was dried by means of a hot-air dryer at 120°C for 30 minutes, obtaining a fiber substrate having a coagulated material.

### [Examples 4 and 5]

Ion-exchanged water was added to 1,000 parts by mass of each of the above-obtained urethane resin water dispersions (4) and (5) so that the resultant dispersion had a solids content of 30% by mass, and 10 parts by mass of a thickener ("Borchi Gel L75N", manufactured by Borchers GmbH) was further added and the resultant mixture was stirred at 2,000 rpm using a mechanical mixer to prepare a blend.

Then, polyester fiber nonwoven fabric (weight per unit area: 250 g/m²) was impregnated with the blend, and then the unnecessary blend was squeezed using a rubber roller mangle so that the impregnation amount became 200%. Then, the nonwoven fabric impregnated with the blend was immersed in a coagulating bath of a 5% by mass aqueous solution of ammonium sulfate (hereinafter, referred to simply as "ammonium sulfate") at 25°C for 3 minutes to cause coagulation of the urethane resin. Further, after the coagulation, while exposing the processed fabric to running water, the fabric was washed with water and squeezed by a rubber roller mangle 10 times. Finally, the fabric was dried by means of a hot-air dryer at 120°C for 30 minutes, obtaining a fiber substrate having a coagulated material.

### [Comparative Example 1]

Ion-exchanged water was added to 1,000 parts by mass of the above-obtained urethane resin water dispersion (1) so that the resultant dispersion had a solids content of 30% by mass, and 10 parts by mass of a thickener ("Borchi Gel L75N", manufactured by Borchers GmbH) was further added and the resultant mixture was stirred at 2,000 rpm using a mechanical mixer to prepare a blend.

Then, polyester fiber nonwoven fabric (weight per unit area: 250 g/m²) was impregnated with the blend, and then heated and dried by means of a hot-air dryer at 120°C for 30 minutes to cause thermal coagulation, obtaining a fiber substrate.

### [Comparative Example 2]

Ion-exchanged water was added to 1,000 parts by mass of the above-obtained urethane resin water dispersion (R1) in the same manner as in Examples 1 to 4 so that the resultant dispersion had a solids content of 30% by mass, and 50 parts by mass of a crosslinking agent ("CARBODILITE V-02-L2", manufactured by Nisshinbo Chemical Inc.) and 10 parts by mass of a thickener ("Borchi Gel L75N", manufactured by Borchers GmbH) were further added and the resultant mixture was stirred at 2,000 rpm using a mechanical mixer to prepare a blend.

Then, the same processing as in Examples 1 to 4 was performed, obtaining a fiber substrate having a coagulated material.

### [Method for measuring a number average molecular weight]

The number average molecular weight of the polyol and the like used in the Synthesis Examples and Comparative Synthesis Example is a value as measured by a gel permeation column chromatography (GPC) method under the conditions shown below.
Measuring apparatus: High-speed GPC apparatus ("HLC-8220GPC", manufactured by Tosoh Corp.)
Columns: The columns shown below, manufactured by Tosoh Corp., which are connected in series were used.
   "TSKgel G5000" (7.8 mm I.D. x 30 cm) x 1
   "TSKgel G4000" (7.8 mm I.D. x 30 cm) x 1
   "TSKgel G3000" (7.8 mm I.D. x 30 cm) x 1
   "TSKgel G2000" (7.8 mm I.D. x 30 cm) x 1

### Detector: RI (differential refractometer)

Column temperature: 40°C
Eluent: Tetrahydrofuran (THF)
Flow rate: 1.0 mL/minute
Sample amount per injection: 100 µL (tetrahydrofuran solution having a sample concentration of 0.4% by mass)
Standard sample: A calibration curve was prepared using the standard polystyrenes shown below.

### (Standard polystyrenes)

"TSKgel standard polystyrene A-500", manufactured by Tosoh Corp.
"TSKgel standard polystyrene A-1000", manufactured by Tosoh Corp.
"TSKgel standard polystyrene A-2500", manufactured by Tosoh Corp.
"TSKgel standard polystyrene A-5000", manufactured by Tosoh Corp.
"TSKgel standard polystyrene F-1", manufactured by Tosoh Corp.
"TSKgel standard polystyrene F-2", manufactured by Tosoh Corp.
"TSKgel standard polystyrene F-4", manufactured by Tosoh Corp.
"TSKgel standard polystyrene F-10", manufactured by Tosoh Corp.
"TSKgel standard polystyrene F-20", manufactured by Tosoh Corp.
"TSKgel standard polystyrene F-40", manufactured by Tosoh Corp.
"TSKgel standard polystyrene F-80", manufactured by Tosoh Corp.
"TSKgel standard polystyrene F-128", manufactured by Tosoh Corp.
"TSKgel standard polystyrene F-288", manufactured by Tosoh Corp.
"TSKgel standard polystyrene F-550", manufactured by Tosoh Corp.

### [Method for measuring an average particle diameter of the urethane resin (X)]

With respect to each of the urethane resin water dispersions obtained in the Examples and Comparative Examples, using a laser diffraction/scattering particle size distribution measurement apparatus ("LA-910", manufactured by Horiba, Ltd.), and using water as a dispersing medium, an average particle diameter was measured when the relative refractive index was 1.10 and the particle diameter standard was an area.

### [Evaluation method for hand feeling]

The obtained processed fabric was evaluated by touch according to the following criteria.
"A": Both stiffness and body are especially excellent.
"B": Stiffness and body are felt.
"C": Stiffness and body are slightly poor.
"D": Neither stiffness nor body is felt.

### [Evaluation method for alkali resistance]

A 1% by mass aqueous solution of sodium hydroxide was placed in a SUS separable flask having an agitating element and heated to 95°C. The processed fabric was placed in the flask and stirred at 50 rpm for 30 minutes. Then, the impregnated processed fabric was removed from the flask, and, while exposing the processed fabric to running water, the fabric was washed with water and squeezed by a rubber roller mangle 10 times. Finally, the resultant fiber substrate was dried by means of a hot-air dryer at 120°C for 30 minutes, and evaluated by touch.
"A": Both stiffness and body are especially excellent.
"B": Stiffness and body are felt.
"C": Stiffness and body are slightly poor.
"D": Neither stiffness nor body is felt.

### [Evaluation method for dyeing resistance]

A 0.5 M sodium acetate buffer having a concentration of 5% by mass and pH of 4.5 and the processed fabric obtained after the test for [Evaluation method for alkali resistance] above were placed in a PTFE pressure vessel and heated at 120°C for 24 hours. Then, the processed fabric was removed from the vessel, and, while exposing the processed fabric to running water, the fabric was washed with water and squeezed by a rubber roller mangle 10 times. Finally, the resultant fiber substrate was dried by means of a hot-air dryer at 120°C for 30 minutes, and evaluated by touch.
"A": Both stiffness and body are especially excellent.
"B": Stiffness and body are felt.
"C": Stiffness and body are slightly poor.
"D": Neither stiffness nor body is felt.

**[Table 1]**

| Table 1 | | Example 1 | Example 2 | Example 3 | Example 4 | Example 5 | Comparative Example 1 | Comparative Example 2 |
|---|---|---|---|---|---|---|---|---|
| Urethane resin water dispersion | | (1) | (2) | (3) | (4) | (5) | (1) | (R1) |
| Compound (a1) having nonionic group | Type | PEG | PEG | PEG | PEG | PEG | PEG | DMPA |
| | Amount (% By mass, based on urethane raw materials) | 2.9 | 1.5 | 1.5 | 1.5 | 1.5 | 2.9 | 1.4 |
| Urethane resin (X) content (% By mass) | | 50 | 60 | 60 | 60 | 50 | 50 | 50 |
| Average particle diameter (µm) of urethane resin (X) | | 0.17 | 0.19 | 0.18 | 0.18 | 0.18 | 0.17 | 0.17 |
| Coagulant (Y) | Type | NaCl | NaCl | NaCl | Ammonium sulfate | Ammonium sulfate | - | NaCl |
| Evaluation of hand feeling | | A | A | A | A | A | D | A |
| Evaluation of alkali resistance | | A | A | A | A | A | C | A |
| Evaluation of dyeing resistance | | A | A | A | A | A | C | C |

As seen from Examples 1 to 4, it was found that the processed fabrics having a coagulated material obtained by the method of the present invention have excellent hand feeling, alkali resistance, and dyeing resistance.

On the other hand, in Comparative Example 1 which corresponds to an embodiment in which thermal coagulation is caused without using the coagulant (Y), the hand feeling, alkali resistance, and dyeing resistance were poor. In Comparative Example 2 which corresponds to an embodiment in which, instead of the urethane resin (X), a urethane resin that does not use the compound (a1) having a nonionic group as a raw material is used and coagulation is caused by the coagulant (Y), the dyeing resistance was poor.

## Claims

1. A method for producing a coagulated material, comprising impregnating a fiber substrate with a water dispersion of a urethane resin (X) which uses a compound (a1) having a nonionic group as a raw material, and then immersing the resultant substrate in a coagulant (Y).

2. The method for producing a coagulated material according to claim 1, wherein the amount of the compound (a1) having a nonionic group used is 5% by mass or less, based on the total mass of raw materials constituting the urethane resin (X).

3. The method for producing a coagulated material according to claim 1 or 2, wherein the coagulant (Y) is at least one member selected from the group consisting of a metal compound (Y1), an acid compound (Y2), and a nonmetal compound (Y3) other than the acid compound (Y2).
